(19) **Europäisches Patentamt / European Patent Office / Office européen des brevets**

(11) **EP 1 751 694 B1**

(12) **FASCICULE DE BREVET EUROPEEN**

(45) Date de publication et mention
de la délivrance du brevet:
**29.10.2008 Bulletin 2008/44**

(21) Numéro de dépôt: **04742819.8**

(22) Date de dépôt: **24.05.2004**

(51) Int Cl.:
**G06K 9/46** (2006.01)

(86) Numéro de dépôt international:
**PCT/FR2004/001280**

(87) Numéro de publication internationale:
**WO 2006/000651 (05.01.2006 Gazette 2006/01)**

(54) **PROCEDE DE CARACTERISATION D'UNE IMAGE NUMERIQUE ET SES APPLICATIONS**

VERFAHREN ZUR CHARAKTERISIERUNG EINES DIGITALEN BILDES UND ANWENDUNGEN DAFÜR

METHOD FOR THE CHARACTERIZATION OF A DIGITAL IMAGE AND THE APPLICATIONS THEREOF

(84) Etats contractants désignés:
**AT BE BG CH CY CZ DE DK EE ES FI FR GB GR HU IE IT LI LU MC NL PL PT RO SE SI SK TR**

(43) Date de publication de la demande:
**14.02.2007 Bulletin 2007/07**

(73) Titulaire: **FRANCE TELECOM**
**75015 Paris (FR)**

(72) Inventeurs:
• **ROS, Julien**
**F-38000 Grenoble (FR)**
• **LAURENT, Christophe**
**F-35630 Vignoc (FR)**

(74) Mandataire: **Joly, Jean-Jacques et al**
**Cabinet Beau de Loménie**
**158, rue de l'Université**
**75340 Paris cedex 07 (FR)**

(56) Documents cités:
**EP-A- 0 684 577**        **FR-A- 2 693 580**

• **BROOKS R R ET AL: "RECOGNITION IN THE WAVELET DOMAIN: A SURVEY" JOURNAL OF ELECTRONIC IMAGING, SPIE + IS&T, US, vol. 10, no. 3, juillet 2001 (2001-07), pages 757-784, XP001086913 ISSN: 1017-9909**

**Description**

L'invention concerne un procédé de caractérisation d'une image numérique et des applications de celui-ci.

Dans de nombreuses applications, comme par exemple la reconnaissance d'images, on cherche à extraire des caractéristiques d'images numériques en vue de les discriminer.

Des procédés de détection de points d'intérêt ou points saillants dans l'image sont connus à cet effet, par exemple par la référence [6]. De tels points d'intérêt sont des points contenant une partie importante de l'information et peuvent être situés par exemple sur les contours des formes présentes dans l'image. On peut définir ces points d'intérêt comme étant des points correspondant aux zones de hautes fréquences de l'image.

Plusieurs techniques sont connues pour caractériser des images.

Ainsi, une première catégorie de techniques caractérisent la couleur en utilisant par exemple un autocorrélogramme ou encore un histogramme des couleurs, comme les références [7], [8], [9] mentionnées ci-dessous.

Dans une deuxième catégorie selon la référence [10] mentionnée ci-dessous, la texture est caractérisée à l'aide de filtres de Gabor.

Enfin, dans une troisième catégorie selon la référence [11] mentionnée ci-dessous, la forme est caractérisée à l'aide d'un histogramme de la distribution des orientations dans l'image. Une approche de ce type est utilisée dans la norme MPEG7.

Ces techniques présentent toutefois l'inconvénient de ne pas caractériser les singularités localisées dans l'image.

L'invention vise à pallier les inconvénients inhérents à l'état de la technique et à obtenir un procédé de caractérisation d'une image numérique utilisant ses points d'intérêt, afin de rendre plus discriminante la caractérisation effectuée.

A cet effet, un premier objet de l'invention est un procédé de caractérisation d'une image numérique, dans lequel on détecte au moins un point d'intérêt dans l'image numérique, associé à une région de l'image présentant de hautes fréquences, caractérisé en ce que

- on sélectionne une première région bidimensionnelle de travail déterminée de l'image numérique, de taille inférieure à celle-ci et contenant le point détecté,
- pour chacune d'une pluralité d'orientations différentes prescrites dans l'image numérique :

  on extrait de la première région bidimensionnelle de travail, suivant des droites ayant ladite orientation, une famille de lignes monodimensionnelles de points,
  on calcule, pour chaque ligne monodimensionnelle de points de la famille extraite et pour chaque niveau de sous-échantillonnage parmi des niveaux prescrits de sous-échantillonnage, un signal d'énergie fovéale utilisant des ondelettes fovéales,

- on exploite les signaux d'énergie fovéale sur les lignes et sur leur argument pour calculer une signature fovéale, dépendant des orientations et des niveaux de sous-échantillonnage et caractérisant la région de travail.

L'invention permet ainsi de calculer une signature pour l'environnement local du point d'intérêt, situé dans la région de travail, et de caractériser ce point d'intérêt.

Suivant d'autres caractéristiques de l'invention,

- le signal $E_{\theta,s}^{(k)}(n)$ d'énergie fovéale est égal à

$$E_{\theta,s}^{(k)}(n) = |\Sigma_m f_\theta^{(k)}(m) \cdot \psi_s^{(1)}(n-m)|^2 + |\Sigma_m f_\theta^{(k)}(m) \cdot \psi_s^{(2)}(n-m)|^2,$$

où
$\theta$ désigne chacune de ladite pluralité de I orientations,
$\{f_\theta^{(k)}(n)\}_{1\leq k\leq K}$ désigne ladite famille desdites K lignes $f_\theta^{(k)}(n)$ monodimensionnelles de points extraite pour chaque orientation $\theta$,
K est un entier naturel prescrit pour chaque orientation $\theta$,
s désigne chaque niveau de sous-échantillonnage parmi lesdits J niveaux prescrits de sous-échantillonnage,
n désigne l'argument des signaux $E_{\theta,s}^{(k)}(n)$ d'énergie fovéale,
$\{\psi_j^{(1)}, \psi_j^{(2)}\}_{1\leq j\leq S}$ est une base desdites ondelettes fovéales, allant jusqu'au niveau s de sous-échantillonnage, de l'espace

fovéal $V_s$ de signaux monodimensionnels discrets, $\{\psi_j^{(1)}\}_{1\leq j\leq s}$ étant une base d'ondelettes fovéales impaires et $\{\psi_j^{(2)}\}_{1\leq j\leq s}$ étant une base d'ondelettes fovéales paires ;

- la base d'ondelettes fovéales impaires $\{\psi_j^{(1)}{}_{1\leq j\leq d}$ est définie par

$$\psi_j^{(1)}(n) = \Phi_j(n).sign(n-1/2) - 2^{-1/2}.\Phi_{j-1}(n).sign(n-1/2),$$

la base d'ondelettes fovéales paires $\{\psi_j^{(2)}\}_{1\leq j\leq s}$ est définie par

$$\psi_j^{(2)}(n) = \Phi_j(n) - 2^{1/2}.\Phi_{j-1}(n),$$

sign(t) étant la fonction signe de la variable réelle t, égale à +1 pour t supérieur à 0 et égale à -1 pour t inférieur à 0, $\Phi_j(t)$. étant une fonction paire de la variable réelle t, vérifiant :

$$\int_{-\infty}^{+\infty} \Phi_0(t).dt \neq 0 \; ;$$

- les bases d'ondelettes fovéales $\{\psi_j^{(1)}, \psi_j^{(2)}\}_{1\leq j\leq s}$ sont construites à partir de fonctions $\Phi_j(t)$ splines définies par :

$$\Phi_0(t) = 1 \; pour \; -1\leq t \leq +1 \; et \; 0 \; ailleurs,$$

et

$$\Phi_j(t) = \int_{-\infty}^{t} (\Phi_{j-1}(2x) - \Phi_{j-1}(x)).sign(x).dx \; pour \; j \geq 1 \; ;$$

- l'extraction de la famille de lignes monodimensionnelles de points suivant les droites à partir de la première région bidimensionnelle de travail est exécutée selon l'algorithme de Bresenham permettant le tracé de droites inclinées sur une grille discrète ;
- ladite signature fovéale est calculée par exploitation statistique des signaux d'énergie fovéale sur les lignes et sur leur argument ;
- ladite signature fovéale SI est égale à

$$SI = (\mu_{is}\sigma_{is})_{1\leq i\leq I, 1\leq s\leq J},$$

avec
$\mu_{si} = (1/NM).\Sigma_k\Sigma_n\Sigma_{i,s}^{(k)}(n)$ correspondant à la moyenne du signal d'énergie fovéale $E_{i,s}^{(k)}(n)$ suivant l'orientation i et le niveau de sous-échantillonnage s sur la région de travail,
$\sigma_{is} = (1/NM).[\Sigma_k\Sigma_n(E_{i,s}^{(k)}(n)- \mu_{is})^2]^{1/2}$ correspondant à l'écart-type du signal d'énergie fovéale $E_{i,s}^{(k)}(n)$ suivant l'orientation i et le niveau de sous-échantillonnage s sur la région de travail,
NM correspondant à la taille de la région de travail ;
- la première région bidimensionnelle de travail entoure le point détecté et a une taille inférieure au dixième de la taille de l'image numérique ;
- la première région bidimensionnelle de travail entoure le point détecté et a une taille inférieure ou égale à 15 pixels x 15 pixels ;
- ladite pluralité d'orientations différentes prescrites dans l'image numérique partagent le secteur angulaire allant de -90˚ à +90˚ par rapport à l'horizontale en des angles égaux ;
- le nombre desdites orientations est de huit ;
- la signature fovéale est associée à l'image numérique et est stockée en mémoire-en-association avec cette image numérique.

Un deuxième objet de l'invention est l'application du procédé de caractérisation à des images numériques en vue de leur comparaison, dans laquelle les signatures fovéales calculées pour les images numériques sont comparées entre elles.

Par exemple, une signature fovéale de référence est calculée pour une image de référence et, pour la comparaison des signatures fovéales, on calcule une distance des signatures fovéales calculées pour les autres images par rapport à la signature de référence, l'image la plus proche de l'image de référence étant celle ayant la distance la plus faible par rapport à celle-ci.

Dans un autre exemple, on sélectionne un nombre prescrit d'images les plus proches de l'image de référence.

Un troisième objet de l'invention est l'application du procédé de caractérisation à la reconnaissance de formes dans l'image numérique, dans laquelle la signature fovéale est utilisée pour caractériser une forme située dans la région de travail.

Par exemple, cette application concerne la reconnaissance de visages, dans laquelle la signature fovéale est utilisée pour caractériser un trait du visage, situé dans la région de travail.

Un quatrième objet de l'invention est l'application du procédé de caractérisation à l'indexation d'images numériques par requêtes partielles, dans laquelle on extrait d'une base d'images numériques, les images numériques contenant un objet spécifié par la requête,

une image numérique étant déterminée comme contenant ledit objet lorsqu'une distance de la signature fovéale calculée pour cette image par rapport à la signature fovéale calculée pour l'objet situé au moins en partie dans la région de travail est inférieure à un seuil prescrit.

Un cinquième objet de l'invention est l'application du procédé de caractérisation à la classification d'images numériques par comparaison de leur signature fovéale.

L'invention sera mieux comprise à la lecture de la description qui va suivre, donnée uniquement à titre d'exemple non limitatif en référence aux dessins annexés, sur lesquels :

- les figures 1 à 5, 6a et 6b illustrent l'exemple de la détection de points d'intérêts mise en oeuvre selon le procédé indiqué dans l'annexe 1, à savoir :

  la figure 1 illustre le principe de l'analyse multi-résolution d'une image 1 par transformations en ondelettes,
  la figure 2 représente schématiquement une transformation ondelette,
  la figure 3 représente une arborescence de coefficients ondelettes,
  la figure 4 présente un exemple de cartes de saillance et les arbres de saillance correspondants,
  la figure 5 illustre la saillance d'une branche de l'arbre de la figure 4,
  les figures 6a et 6b illustrent des résultats expérimentaux du procédé, la figure 6a présentant deux images originales et la figure 6b les points saillants correspondants,

- la figure 7 représente schématiquement une image numérique sur laquelle le procédé de caractérisation suivant l'invention est mis en oeuvre, les pixels y étant représentés par des carrés juxtaposés,
- la figure 8 représente schématiquement un exemple d'orientations dans l'image de la figure 7, qui sont utilisées dans le procédé de caractérisation suivant l'invention,
- la figure 9 représente la fonction $\Phi_2(n)$ de la variable discrète n, utilisée dans le procédé de caractérisation suivant l'invention,
- la figure 10 représente la fonction $\psi_2^{(2)}(n)$ de la variable discrète n, utilisée dans le procédé de caractérisation suivant l'invention,
- la figure 11 représente la fonction $\psi_2^{(1)}(n)$ de la variable discrète n, utilisée dans le procédé de caractérisation suivant l'invention,
- la figure 12 représente schématiquement un exemple d'application du procédé de caractérisation suivant l'invention pour la recherche d'images dans une base d'images.

L'invention comprend par exemple les étapes suivantes :

- détection des points-saillants,
- sur chaque point saillant, on extrait K lignes (préférentiellement 8) lignes à partir de K orientations dans un voisinage de ce point saillant (par exemple voisinage 5x5),
- chaque ligne est projetée sur une base d'ondelettes fovéales (par exemple obtenu à partir de splines),
- on obtient un jeu de (K x nombre de niveaux) coefficients (amplitude de réponse fovéale) : par exemple (24 x nombres de points de chaque ligne) coefficients,
- on réalise une étude statistique sur ces coefficients par niveau et par orientation (moyenne, écart-type),
- on range cette information pour chaque point saillant de l'image, associé à l'image,
- on compare cette référence à une image à analyser pour caractériser sa distance par rapport à cette référence suivant des moyens connus de l'art antérieur.

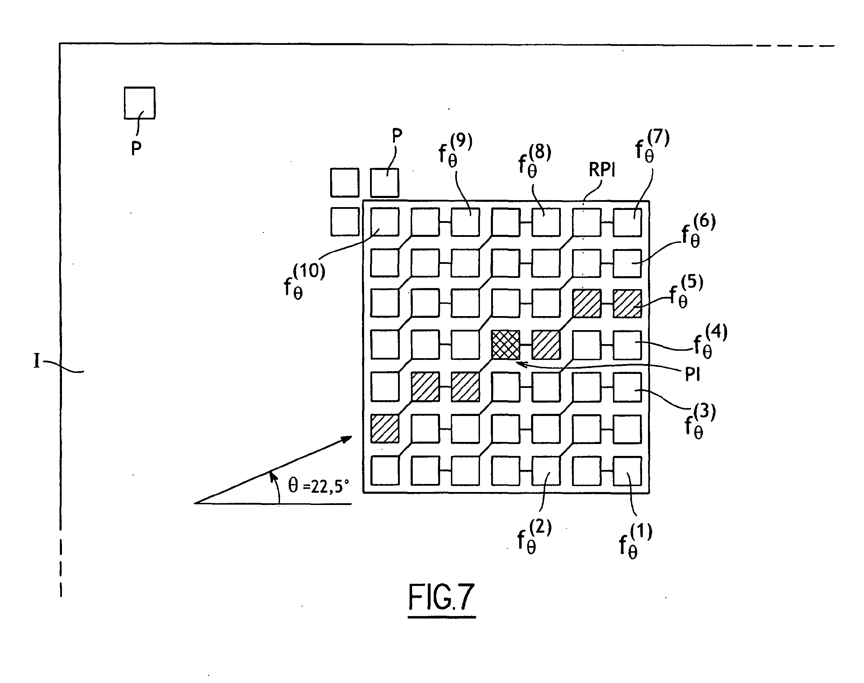

A la figure 7 est représenté une image numérique 1 constituée de N colonnes x M lignes de points ou pixels P, en couleurs ou en noir et blanc.

Au cours d'une première étape du procédé suivant l'invention, on détecte un ou plusieurs points d'intérêt PI parmi les points P de l'image numérique 1.

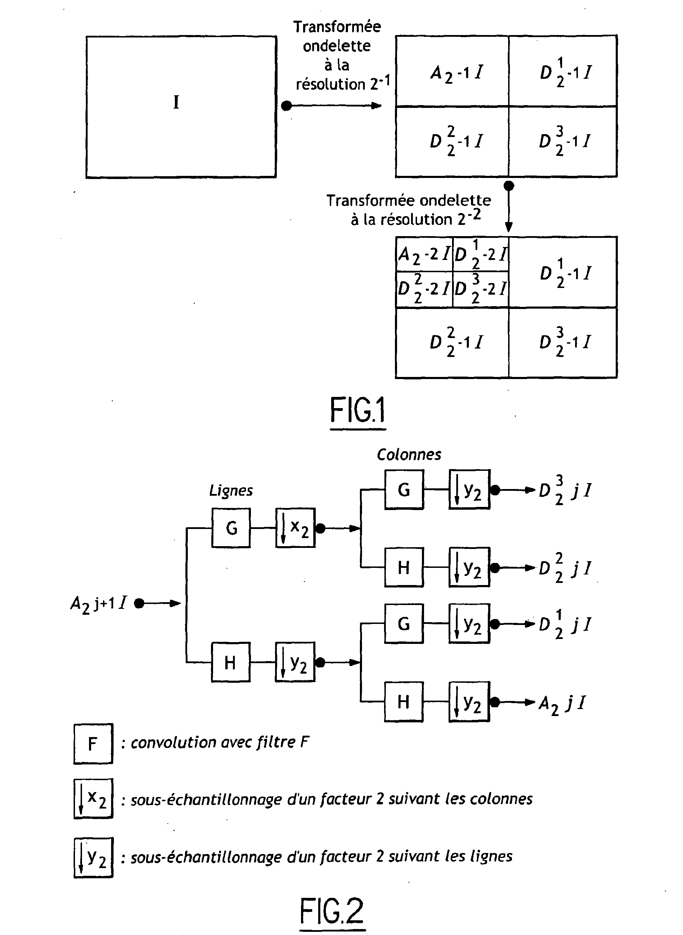

Dans ce qui suit, on suppose que l'on a détecté le point d'intérêt PI de la figure 7. La détection des points d'intérêt est effectuée par exemple selon le procédé de détection de points d'intérêt ou de points saillants décrit dans l'annexe 1, la référence [6] et les figures 1 à 5, 6a, 6b , lequel procédé met en oeuvre une transformation en ondelettes associant à une image numérique source une image sous-échantillonnée, dite image échelle et des coefficients ondelettes correspondant à au moins une image de détails, pour au moins un niveau de décomposition, un point d'intérêt étant un point associé à une région de l'image présentant des hautes fréquences, le procédé comprenant les étapes suivantes :

- application de ladite transformation en ondelettes à ladite image source ;
- construction d'une arborescence unique, à partir des coefficients ondelettes de chacune desdites images de détails ;
- sélection d'au moins un point d'intérêt, par analyse de ladite arborescence.

Bien entendu, la détection de points d'intérêt peut être effectuée à l'aide d'autres procédés que celui décrit à l'annexe 1 et aux figures 1 à 6.

Au cours d'une deuxième étape, une région RPI bidimentionnelle de travail autour du point d'intérêt PI est sélectionnée dans l'image I. Cette région RPI de travail a par exemple une taille rectangulaire ou carrée suivant les côtés de l'image 1 et a une taille nettement inférieure à celle-ci. La région RPI est par exemple centrée sur le point d'intérêt PI, en ayant par exemple des nombres impairs de pixels dans ses rangées et dans ses colonnes. Par exemple, à la figure 7, la région RPI est constituée d'un carré de 7 x 7 pixels, dont le pixel central est occupé par le point PI d'intérêt. Bien entendu, la région RPI de travail pourrait avoir une forme non rectangulaire, tout en contenant le point PI.

Au cours d'une deuxième étape, des lignes $f_\theta^{(k)}(n)$ sont extraites de la région RPI de travail, suivant des droites ayant l'orientation θ par rapport à l'horizontale. Cette extraction est effectuée pour plusieurs orientations θ prescrites. Ces orientations θ sont par exemple espacées d'un même angle les unes des autres. Elles sont par exemple égales à :

$$\theta = i.\pi/I + \beta \text{ pour } - I/2 < i \leq + I/2$$

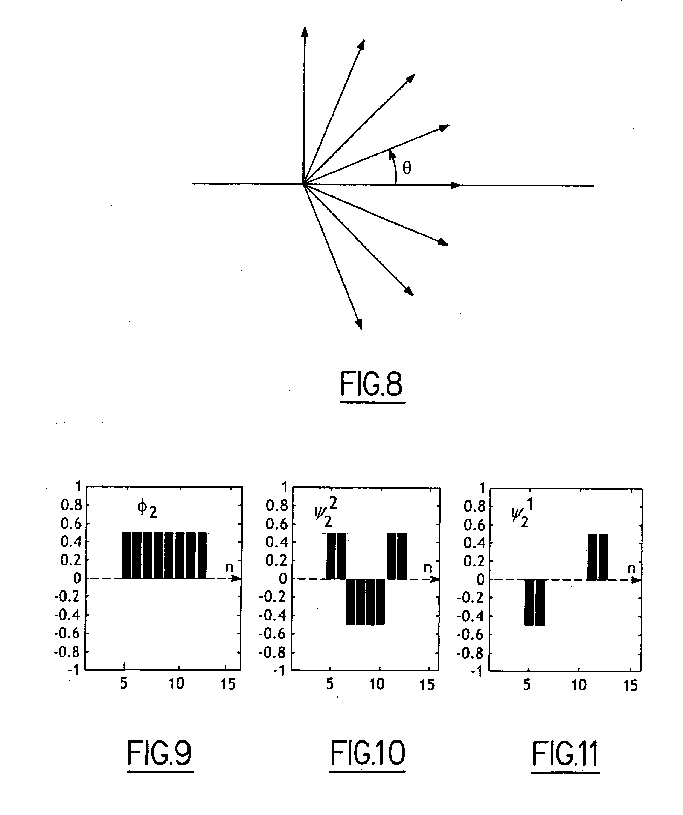

Par exemple, à la figure 8, I = 8 orientations θ sont prévues à respectivement $\dfrac{-3\pi}{8}, \dfrac{-\pi}{4}, \dfrac{-\pi}{8}, 0, \dfrac{\pi}{8}, \dfrac{\pi}{4},$ $\dfrac{3\pi}{8}, \dfrac{\pi}{2} .$

L'extraction des lignes $f_\theta^{(k)}(n)$ est représentée à titre d'exemple pour $\theta = \dfrac{\pi}{8}$ à la figure 7. Pour chaque orientation θ, les lignes $f_\theta^{(k)}(n)$ sont donc inclinées de l'angle θ par rapport à l'horizontale.

Les lignes de points sont par exemple tracées suivant l'algorithme de Bresenham selon la référence [12] mentionnée ci-dessous, qui permet le tracé de lignes sur une image de points discrets. Cet algorithme est utilisé notamment pour l'affichage de segments de droite inclinés sur un écran d'ordinateur. Pour une droite y = a.x + b devant être tracée entre les points $(x_1, y_1)$ et $(x_2, y_2)$ sur la trame discrète de points de l'écran, les coordonnées des points du segment sont données par y = arrondi (ax + b) pour tous les x compris entre $x_1$ et $x_2$, la fonction arrondi ramenant à l'entier naturel le plus proche.

Ainsi, l'algorithme de tracé de segments de droite inclinés sur une trame discrète peut être mis en oeuvre de la manière suivante :

- pour les orientations θ comprises entre 0 et 45˚, pour x croissant d'un pas de pixel vers la droite par rapport au pixel précédent, on prend y sur ou en dessous de la diagonale à 45˚ calculée par rapport au pixel précédent, en fonction de la valeur de l'orientation θ, c'est-à-dire le pixel situé immédiatement à droite du pixel précédent et ayant donc la même valeur de y ou le pixel situé immédiatement à droite et en haut du pixel précédent, et
- pour θ compris entre 45˚ et 90˚, on permute le rôle de x et y.

Suivant l'invention, on extrait K lignes $f_\theta^{(k)}(n)$ de la région de travail RPI pour chaque orientation θ, qui représentent K droites parallèles suivant cette orientation θ, traversant la région RPI et décalées chacune d'un pixel en abscisse et/ou en ordonnée. K est un entier naturel dépendant de chaque orientation θ ou constant pour les I orientations θ. L'extraction est effectuée de manière à couvrir pour chaque orientation θ l'ensemble des points de la région RPI. Par conséquent, pour chaque orientation θ, chaque point de la région de travail RPI appartient à une seule ligne $f_\theta^{(k)}(n)$ ainsi extraite. Bien entendu, il pourrait être extrait de la région de travail RPI des lignes $f_\theta^{(k)}(n)$ ne couvrant pas tous les points de celles-ci. Suivant l'invention, il est prévu qu'au moins la ligne contenant le point d'intérêt PI suivant l'orientation θ est extraite de la région de travail RPI ($f_\theta^{(5)}$ à la figure 7) et en plus au moins une autre ligne contenant un autre point de la région de travail RPI, qui est par exemple des deuxième et troisième lignes situées de part et d'autre de la ligne contenant le point PI d'intérêt, comme la ligne $f_\theta^{(7)}$ et $f_\theta^{(3)}$ dans l'exemple précédent de la figure 7.

La famille $\{f_\theta^{(k)}(n)\}_{1 \leq k \leq K}$ de lignes $f_\theta^{(k)}(n)$ est déterminée dans la région de travail RPI pour chacune des I orientations θ choisies. Les lignes $f_\theta^{(k)}(n)$ sont donc des signaux discrets monodimensionnels ayant comme argument n indiquant le numéro du point dans la ligne et ayant comme valeur la valeur du point n de cette ligne dans la région de travail RPI, comme par exemple son niveau de gris dans l'image I.

Au cours d'une troisième étape, on calcule, pour chaque ligne $f_\theta^{(k)}(n)$ extraite un signal $E_{\theta,s}^{(k)}(n)$ d'énergie fovéale, s indiquant un niveau de sous-échantillonnage parmi J niveaux prescrits de sous-échantillonnages pour lesquels ce signal est calculé, -s indiquant un niveau de résolution.

La théorie des ondelettes fovéales est rappelée ci-dessous.

Pour une image rectangulaire de taille A × B, un sous-échantillonnage abouti à une image rectangulaire de taille A' × B' inférieure à la taille A × B.

On pourra se reporter à l'annexe 2 et à la référence [5] mentionnée ci-dessous pour la théorie des ondelettes fovéales.

Les ondelettes fovéales sont constituées de toutes les dilatations dyadiques d'une ondelette symétrique ou paire $\psi^{(2)}$ est d'une ondelette antisymétrique ou impaire $\psi^{(1)}$, ces ondelettes étant construites à partir d'une fonction mère Φ.

Le signal d'énergie fovéale est égal à :

$$E_{\theta,s}^{(k)}(n) = |<f_\theta^{(k)}(m), \psi_{s,m}^{(1)}(n)>|^2 + |<f_\theta^{(k)}(m), \psi_{s,m}^{(2)}(n)>|^2$$

Où $\psi_{s,m}^{(1)}(n) = \psi_s^{(1)}(n-m)$ et $\psi_{s,m}^{(2)}(n) = \psi_s^{(2)}(n-m)$, par analogie avec le cas continu, dans lequel $g_{s,u}(t) = 2^{-s/2}.g(2^{-s}(t-u))$ est une fonction de la variable réelle t, obtenue par translation de u et dilatation du niveau de sous-échantillonnage $2^{-s}$.

Par conséquent,

$$E_{\theta,s}^{(k)}(n) = |\Sigma_m f_\theta^{(k)}(m) . \psi_s^{(1)}(n-m)|^2 + |\Sigma_m f_\theta^{(k)}(m) . \psi_s^{(2)}(n-m)|^2.$$

Au cours d'une quatrième étape, une signature fovéale SI est calculée à partir des signaux d'énergie fovéale $E_{\theta,s}^{(k)}(n)$, pour caractériser la région de travail RPI et l'image numérique 1.

Dans cette signature fovéale SI, les variables k représentent les différentes lignes extraites pour une même orientation θ dans la région de travail RPI et l'argument n sont éliminés des signaux d'énergie fovéales $E_{\theta,s}^{(k)}(n)$, afin que la signature fovéale SI ne dépende que des I orientations θ choisies et des J niveaux prescrits de sous-échantillonnages. Cette signature fovéale SI sera par exemple égale à :

$$SI = (\mu_{is}\sigma_{is})_{1 \leq i \leq I, 1 \leq s \leq J}, = (\mu_{00}, \sigma_{00}, \mu_{10}, \sigma_{10}\ldots \mu_{IJ}, \sigma_{IJ}),$$

avec

$\mu_{is} = (1/NM).\Sigma_k\Sigma_n E_{i,s}^{(k)}(n)$ correspondant à la moyenne du signal d'énergie fovéale $E_{i,s}^{(k)}(n)$ suivant l'orientation i et le niveau de sous-échantillonnage s sur la région de travail RPI,

$\sigma_{is} = (1/NM).[\Sigma_k\Sigma_n(E_{i,s}^{(k)}(n) - \mu_{is})^2]^{1/2}$ correspondant à l'écart-type du signal d'énergie fovéale $E_{i,s}^{(k)}(n)$ suivant l'orientation i et le niveau de sous-échantillonnage s sur la région de travail RPI,

NM correspondant à la taille de la région de travail RPI.

Dans ce qui précède, m, n, k, K, s, j, 1, J, i sont des entiers naturels.

Dans le cas d'une région de travail carrée, $NM = N^2$.

La signature fovéale SI peut être utilisée de différentes manières, ainsi que cela est décrit ci-dessous.

La signature fovéale SI est par exemple associée à l'image numérique I et est stockée en mémoire en association avec celle-ci.

Dans une première application, plusieurs images numériques sont comparées entre elles par le biais de leur signature fovéale.

Les signatures fovéales sont comparées par exemple au moyen d'une classique distance $L^2$.

Par exemple, on compare des images à une image de référence, pour savoir quelles sont les images les plus proches ou les plus ressemblantes à cette image de-référence, qui sera déterminée comme étant celle dont la signature fovéale a la distance la plus petite par rapport à la signature fovéale de l'image de référence.

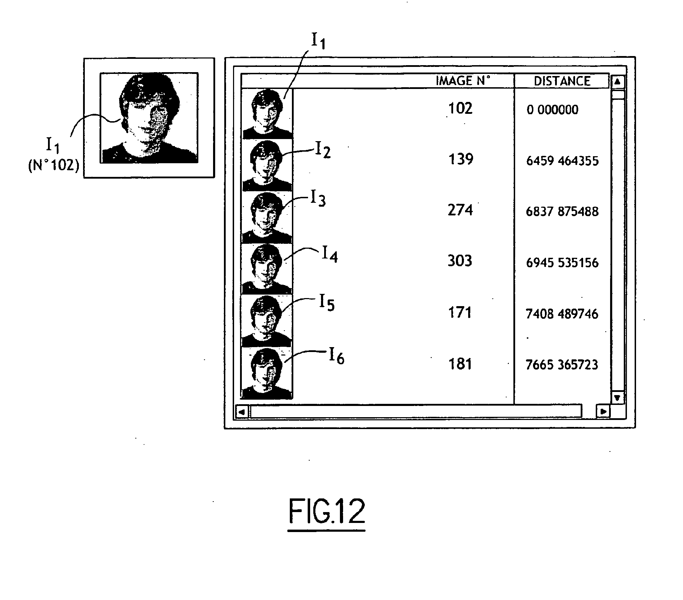

Ainsi, l'image de référence est par exemple la grande image 11 de gauche à la figure 12. Cette image représente une personne.

Si l'on veut sélectionner dans une base d'images des images de cette même personne, on calcule la signature fovéale de l'image 11 de référence et on la compare aux signatures fovéales des autres images stockées dans la base, pour en extraire celles ayant les distances les plus faibles par rapport à la signature fovéale de l'image 11 de référence. Ainsi, cette extraction fournit de nouveau l'image 11 ayant la distance 0 et des images 12, 13, 14, 15, 16 de distances les plus faibles et croissantes par rapport à l'image 11 de référence, qui correspondent aux images N° 102, 139, 274, 303, 171 et 181 de la base de 700 images. On voit qu'ainsi les images 12, 13, 14, 15, 16 sont celles de la même personne que dans l'image 11 mais avec d'autres expressions du visage que dans l'image 11, ces images étant prises successivement lorsque la personne parle. Par contre, une image d'une autre personne aurait une signature ayant une distance beaucoup plus grande que celle des images 12 à 16 par rapport à l'image 11 de référence.

Une deuxième application est la reconnaissance de formes dans une image. Dans ce cas, le point d'intérêt sera détecté comme faisant partie du contour de la forme à reconnaître. La région de travail contiendra alors, en tout ou en partie, la forme à reconnaître et il sera obtenu la signature fovéale de tout ou partie de cette forme à reconnaître. Cette forme peut être par exemple un trait du visage, tel qu'un oeil, la bouche, le nez, qui sont des zones où les contours sont marqués. Les traits du visage d'une personne étant caractéristiques de celle-ci, cette application permettra la recherche de personnes dans des images ou la recherche d'images contenant une personne.

Une troisième application concerne l'indexation d'images numériques par requêtes partielles qui permet d'extraire d'une base d'images toutes les images contenant un objet similaire à un objet requête spécifié par l'utilisateur.

Une quatrième application est la classification d'images, qui permet de regrouper les images d'une base en un ensemble restreint de groupes, chaque groupe représentant une thématique particulière (paysage, sport, etc...). Cette application peut aider à la navigation au sein des bases d'images, par exemple dans les bases d'images créées par des utilisateurs à partir de leur appareil photo numérique.

Bien entendu, le procédé suivant l'invention fonctionne avec tout outil mathématique ayant les mêmes caractéristiques que la base d'ondelettes fovéales décrite ci-dessus.

En outre, le procédé suivant l'invention s'applique à la caractérisation de tout objet numérique, pouvant être une image bidimensionnelle comme cela est décrit ci-dessus, mais également une image tridimensionnelle, les lignes devant alors être considérées comme des plans, et les étapes du procédé étant alors adaptées de manière correspondante.

### ANNEXE 1

### DETECTION DE POINTS D'INTERET

### *Principes généraux*

Un but de l'invention est donc la détection des points saillants d'une image $I$. Ces points correspondent aux pixels de $I$ appartenant à des régions de haute fréquence. Pour ce faire, on se base sur la théorie des ondelettes [1][2][3], [6]

La transformée en ondelettes est une représentation multi-résolution de l'image qui permet d'exprimer l'image aux différentes résolutions $\frac{1}{2}, \frac{1}{4}$ „ *etc..* Ainsi, à chaque niveau de résolution $2^j (j \leq -1)$, la transformée en ondelettes

représente l'image $I$, de taille $n \times m = 2^k \times 2^l$ *(k,l∈ Z),* sous la forme :

❖ d'une image grossière $A_{2^j}I$ ;

❖ d'une image $D_{2^j}^1 I$ de détails représentant les hautes fréquences verticales (i.e. les contours horizontaux) ;

❖ d'une image $D_{2^j}^2 I$ de détails représentant les hautes fréquences horizontales (i.e. les contours verticaux) ;

❖ d'une image $D_{2^j}^3 I$ de détails représentant les hautes fréquences diagonales (i.e. les coins).

Chacune de ces images est de taille $2^{k+j} \times 2^{l+j}$. La figure 1 illustre ce type de représentation.

Chacune de ces trois images est obtenue à partir $A_{2^{j+1}}I$ par un filtrage suivi d'un sous-échantillonnage d'un facteur deux dans chaque direction comme le montre la 2. Il est à noter que l'on a $A_{2^0}I=I$.

L'invention consiste à choisir, en premier lieu, une base d'ondelettes et un niveau de résolution minimal $2^r$ ($r \leq -1$). Une fois la transformation ondelette effectuée, nous proposons de parcourir chacune des trois images de détails $D_{2^r}^1 I$, $D_{2^r}^2 I$ et $D_{2^r}^3 I$ afin de construire une arborescence de coefficients ondelettes. Cette arborescence est basée sur l'approche Zerotree [4], initialement proposée pour le codage d'image. Elle permet de mettre en place une carte de saillance de taille $2^{k+r} \times 2^{l+r}$ reflétant l'importance de chaque coefficient ondelette à la résolution $2^r$($r \leq -1$).

Ainsi, un coefficient ayant une saillance importante correspond à une région de $I$ présentant des hautes fréquences. En effet, un coefficient ondelette de module important à la résolution $2^r$($r \leq -1$) correspond à un contour de l'image $A_{2^{r+1}}I$ suivant une direction particulière (horizontale, verticale ou oblique). L'approche Zerotree nous indique que chacun des coefficients ondelettes à la résolution $2^r$ correspond à une zone spatiale de taille $2^{-r} \times 2^{-r}$ dans l'image $I$.

A partir de la carte de saillance construite, l'invention propose une méthode permettant de choisir parmi les $2^{-r} \times 2^{-r}$ pixels de $I$, le pixel le plus représentatif de cette zone.

### *Tranformation ondelette*

La transformation ondelette est un outil mathématique puissant permettant l'analyse multi-résolution d'une fonction [1][2][3].

Dans le cas de l'invention, les fonctions considérées sont des images numériques c'est-à-dire des fonctions bi-dimensionnelles discrètes. Sans perte de généralités, nous supposons que les images traitées sont échantillonnées sur une grille discrète de n lignes et m colonnes et à valeur dans un espace de luminance échantillonné à 256 valeurs. De plus, nous supposons que n = $2^k$ ($k \in Z$) et que $m = 2^l$ ($l \in Z$).

Si nous notons $I$ l'image originale, nous avons alors :

$$I : \begin{vmatrix} [0,m] \times [0,n] \to [0,255] \\ (x,y) \text{ a } I(x,y) \end{vmatrix}.$$

Comme mentionné la transformation ondelette de $I$ permet une représentation multi-résolution de $I$. A chaque niveau de résolution $2^j$($j \leq -1$), la représentation de $I$ est donnée par une image grossière $A_{2^j}I$ et par trois images de détails $D_{2^j}^1 I$, $D_{2^j}^2 I$ et $D_{2^j}^3 I$. Chacune de ces images est de taille $2^{k+j} \times 2^{l+j}$. Ce processus est illustré sur la figure 2.

La transformation ondelette nécessite le choix d'une fonction échelle $\Phi(x)$ ainsi que le choix d'une fonction ondelette $\psi(x)$. A partir de ces deux fonctions, on dérive un filtre échelle $H$ et un filtre ondelette $G$ dont les réponses impulsionnelles respectives $h$ et $g$ sont définies par :

$$h(n) = \left\langle \phi_{2^{-1}}(u), \phi(u-n) \right\rangle \forall n \in Z \; , \qquad \Phi_i^j(x) = \Phi(2^j x - i),$$

$$g(n) = \left\langle \psi_{2^{-1}}(u), \phi(u-n) \right\rangle \forall n \in Z , \qquad \Psi_i^j(x) = \Psi(2^j x - i).$$

Notons respectivement $\tilde{H}$ et $\tilde{G}$ les filtres miroirs de $H$ et $G$ (i.e. $\tilde{h}(n) = h(-n)$ et $\tilde{g}(n) = g(-n)$).

On peut alors montrer [1] (cf. figure 2) que :

❖ $D_{2^j}^1 I$ peut être calculée en :

❖

1. convoluant $A_{2^{j+1}}I$ avec $\tilde{H}$ suivant la direction $y$ et en sous-échantillonnant d'un facteur deux suivant cette même direction ;

2. convoluant le résultat de l'étape 1) avec $\tilde{G}$ suivant la direction *x* et en sous-échantillonnant d'un facteur deux suivant cette même direction.

❖ $D_{2^j}^2 I$ peut être calculée en :

1. convoluant $A_{2^{j+1}}I$ avec $\tilde{G}$ suivant la direction *y* et en sous-échantillonnant d'un facteur deux suivant cette même direction ;

2. convoluant le résultat de l'étape 1) avec $\tilde{H}$ suivant la direction *x* et en sous-échantillonnant d'un facteur deux suivant cette même direction.

❖ $D_{2^j}^3 I$ peut être calculée en :

1. convoluant $A_{2^{j+1}}I$ avec $\tilde{G}$ suivant la direction *y* et en sous-échantillonnant d'un facteur deux suivant cette même direction ;

2. convoluant le résultat de l'étape 1) avec $\tilde{G}$ suivant la direction *x* et en sous-échantillonnant d'un facteur deux suivant cette même direction.

### Construction de l'arborescence des coefficients ondelettes

Une fois la transformation ondelette effectuée jusqu'à la résolution $2^r$ ($r \leq -1$) , on dispose :

❖ D'une image approximée $A_{2^r}I$;

❖ De trois images de détails $D_{2^j}^1 I$, $D_{2^j}^2 I$, $D_{2^j}^3 I$ par niveau de résolution $2^j$ avec j=-1,...,r.

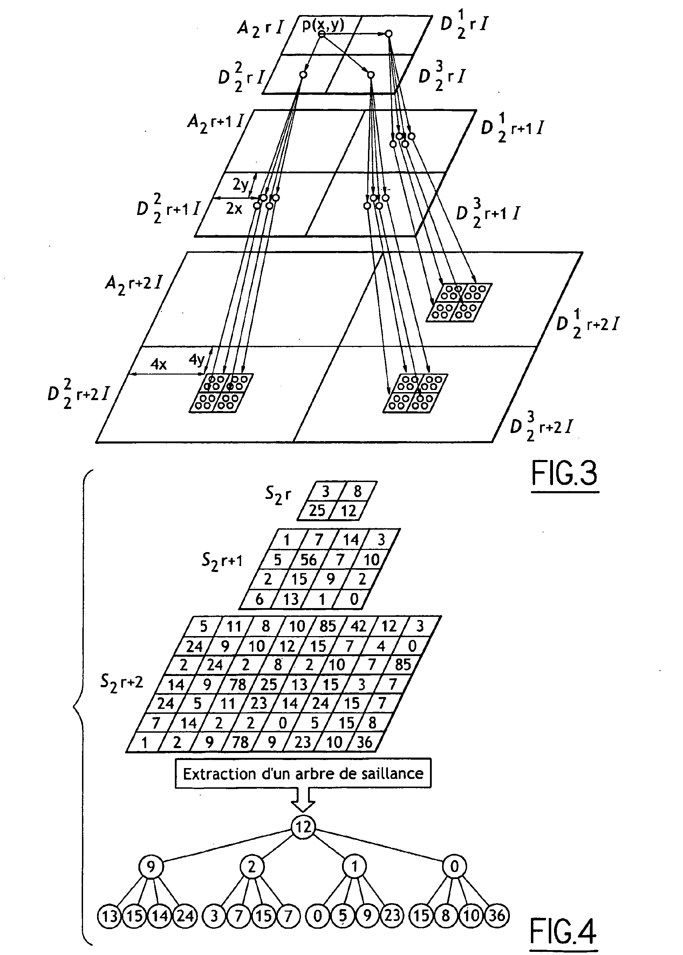

On construit alors une arborescence des coefficients ondelettes en se basant sur la technique Zerotree [4]. Les arbres sont construits de la façon suivante (cf.figure 3) :

❖ Chaque pixel *p(x,y)* de l'image $A_{2^r}I$ est la racine d'un arbre ;

❖ Chaque racine *p(x,y)* se voit attribuer trois noeuds fils désignés par les coefficients ondelettes des trois images de détails $D_{2^r}^s I$ (s=1,2,3) localisés au même emplacement *(x,y)* ;

❖ Du fait du sous-échantillonnage d'un facteur deux effectué par la transformation ondelette à chaque changement de résolution, chaque coefficient ondelette $\alpha_{2^r}^s(x,y)$ (s=1,2,3) correspond à une zone de taille $2 \times 2$ pixels dans l'image détail correspondante à la résolution $2^{r+1}$. Cette zone est localisée en (2*x*,2*y*) et tous les coefficients ondelettes y appartenant deviennent les noeuds fils de $\alpha_{2^r}^s(x,y)$.

De façon récursive, on construit l'arborescence dans laquelle chaque coefficient ondelette $\alpha_{2^u}^s(x,y)$ (s=1,2,3 et 0>u>r) possède quatre noeuds fils désignés par les coefficients ondelettes de l'image $D_{2^{u+1}}^s I$ localisés dans la région située en *(2x,2y)* et de taille $2 \times 2$ pixels.

Une fois l'arborescence construite, chaque coefficient ondelette $\alpha_{2^r}^s(x,y)$ (s=1,2,3) correspond à une région de taille $2^{-r} \times 2^{-r}$ pixels dans l'image détail $D_{2^{-1}}^s I$ .

### Construction des cartes de saillance

A partir de l'arborescence obtenue par l'étape précédente, nous proposons de construire en ensemble de -r cartes de saillance (i.e. une carte de saillance par niveau de résolution). Chaque carte de saillance $S_{2^j}$(j=-1,...,r) reflète l'importance des coefficients ondelettes présents à la résolution correspondante $2^j$. Ainsi, plus un coefficient ondelette sera jugé important au sens de l'information qu'il véhicule, plus sa valeur de saillance sera importante.

Il est à noter que chaque coefficient ondelette privilégie une direction (horizontale, verticale ou oblique) suivant l'image de détails à laquelle il appartient. Cependant, nous avons choisi de ne privilégier aucune direction particulière et nous avons donc fusionné l'information contenue dans les trois coefficients ondelettes

$\alpha_{2^j}^1(x,y), \alpha_{2^j}^2(x,y), \alpha_{2^j}^3(x,y)$ quelque soit le niveau de résolution $2^j$ et quelque soit la localisation (x,y) avec $0 \le x < 2^{k+j}$ et $0 \le y < 2^{l+j}$. Chaque carte de saillance $S_{2^j}$ est de taille $2^{k+j} \times 2^{l+j}$.

D'autre part, la saillance de chaque coefficient à la résolution $2^j$ doit prendre en compte la saillance de ses descendants dans l'arborescence des coefficients.

Afin de prendre en compte l'ensemble de ces propriétés, la saillance d'un coefficient localisé en (*x,y*) à la résolution $2^j$ est donnée par la relation récursive suivante :

$$\begin{cases} S_{2^{-1}}(x,y) = \alpha_{-1}\left(\frac{1}{3}\sum_{u=1}^{3}\frac{D_{2^{-1}}^u(x,y)}{Max(D_{2^{-1}}^u)}\right) \\ S_{2^j}(x,y) = \frac{1}{2}\left(\alpha_j\left(\frac{1}{3}\sum_{u=1}^{3}\frac{D_{2^j}^u(x,y)}{Max(D_{2^j}^u)}\right) + \frac{1}{4}\sum_{u=0}^{1}\sum_{v=0}^{1}S_{2^{j+1}}(2x+u,2y+v)\right) \end{cases}$$

## Équation 1: expression de la saillance d'un coefficient

où

❖ $Max(D_{2^j}^s)$ (s=1,2,3) dénote la valeur maximale des coefficients ondelettes dans l'image détail $D_{2^j}^s I$ ;

❖ $\alpha_k$ ($0 \le \alpha_k \le 1$)) permet de régler l'importance des coefficients de saillance suivant le niveau de résolution. Il est à noter que l'on a $\sum_k \alpha_k = 1$.

❖ Il est important de noter que les valeurs de saillance sont normalisées i.e. $0 \le S_{2^j}(x,y) \le 1$.

Comme on peut le voir sur l'Équation 1, la saillance d'un coefficient est une relation linéaire des coefficients ondelettes. En effet, comme nous l'avons mentionné, nous considérons les points saillants comme des pixels de l'image appartenant à des régions de haute fréquence. Or, un coefficient ondelette $\alpha_{2^j}^s(x,y)$ (s=1,2,3) élevé à la résolution $2^j$ dénote une zone de haute fréquence dans l'image $A_{2^{j+1}}I$ à la localisation (2*x*,2*y*). En effet, les images de détails étant obtenues par un filtrage passe-haut de l'image $A_{2^{j+1}}I$, chaque contour de $A_{2^{j+1}}I$ génère un coefficient ondelette élevé dans une des images de détail à la résolution $2^j$ et correspondant à l'orientation du contour.

Ainsi, la formulation de la saillance d'un coefficient donnée dans l'Équation 1 se justifie.

### *Choix des points saillants*

Une fois la construction des cartes de saillance achevée, nous proposons une méthode afin de choisir les points les plus saillants dans l'image originale.

Pour ce faire, nous construisons une arborescence des valeurs de saillance à partir des -r cartes de saillance construites. De façon analogue à la construction de l'arborescence des coefficients ondelettes, nous pouvons construire $2^{k+l+2r}$ arbres de coefficients de saillance, chacun ayant pour racine un coefficient de $S_{2^r}$ Comme pour la technique Zerotree, chacun de ces coefficients correspond à une zone de taille 2x2 coefficients dans la carte $S_{2^{r+1}}$. On peut alors construire recursivement l'arbre dans lequel chaque noeud se voit attribuer quatre noeuds fils dans la carte de saillance de résolution immédiatement supérieure. La figure 4 illustre cette construction.

Afin de localiser les points les plus saillants dans *I*, nous procédons :

1. à un tri par ordre décroissant des $2^{k+l+2r}$ valeurs de saillance présentes dans $S_{2^r}$ ;
2. à la sélection de la branche de saillance maximale de chacun des $2^{k+l+2r}$ arbres ainsi triés.

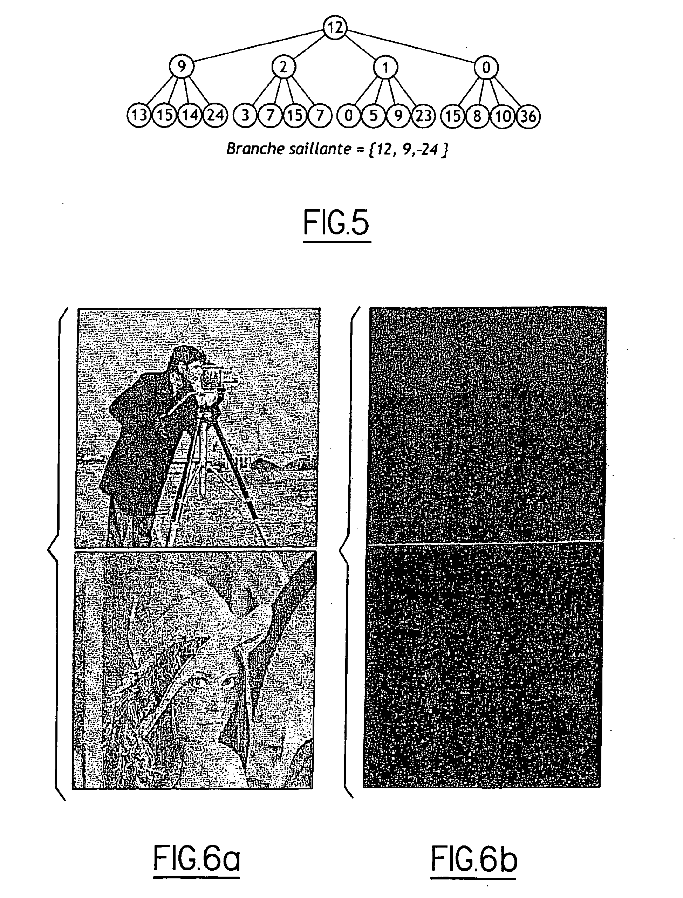

Afin de sélectionner cette branche, nous proposons d'effectuer un parcours de l'arbre à partir de la racine dans lequel nous sélectionnons à chaque niveau de l'arbre le noeud fils ayant la valeur de saillance la plus importante (cf. figure 5). Nous obtenons ainsi une liste de -r valeurs de saillance :

$$Branche \text{ saillante} = \left\{ s_{2^r}(x_1, y_1), s_{2^{r+1}}(x_2, y_2), L, s_{2^{-1}}(x_{-r}, y_{-r}) \right\}$$

avec

$$(x_k, y_k) = Arg\ Max\left\{ s_{2^{r+(k-2)}}(2x_{k-1} + u, 2y_{k-1} + v), 0 \le u \le 1, 0 \le v \le 1 \right\}.$$

A partir des branches les plus saillantes de chaque arbre, le pixel de *l* choisi comme étant le plus représentatif de la branche est localisé en *(2x₋ᵣ,2y₋ᵣ)*. Dans la pratique, on parcourt uniquement un sous-ensemble des $2^{k+l+2r}$ arbres. En effet, pour de nombreuses applications, on recherche un nombre fixe *n* de points saillants. Dans ce cas, il convient de ne parcourir que les *n* arbres ayant les racines les plus saillantes.

### Choix de la transformation ondelette

Comme nous l'avons mentionné , nous devons en premier lieu choisir une base d'ondelettes et le niveau minimal de résolution $2^r$ $(r \le -1)$. Pour ce mode particulier de réalisation, nous proposons d'utiliser la base de Haar et r=-4.

La base de Haar est définie par :

$$\phi(x) = \begin{cases} 1\ si\ 0 \le x < 1 \\ 0\ sinon \end{cases}$$

pour la fonction échelle, et par :

$$\psi(x) = \begin{cases} 1\ si\ 0 \le x < \dfrac{1}{2} \\ -1\ si\ \dfrac{1}{2} \le x < 1 \\ 0\ sinon \end{cases}$$

pour la fonction ondelette.

### Construction de l'arborescence des coefficients ondelettes

Dans cette étape, aucun paramètre n'est requis. Le processus est donc conforme à ce qui est décrit.

### Construction des cartes de saillance

Dans cette étape, nous devons choisir les paramètres $\alpha_k$ $(-1 \ge k \ge r)$ permettant de régler l'importance accordé aux coefficients de saillance suivant le niveau de résolution auquels ils appartiennent.

Dans ce cas particulier de réalisation, nous proposons d'utiliser

$$\alpha_k = \frac{-1}{r}\ \forall k \in [r, -1].$$

Les résultats obtenus sur des images naturelles en utilisant les paramètres proposés dans ce mode particulier de réalisation sont illustrés sur la figure 6.

**ANNEXE 2**

ONDELETTES FOVEALES

**1. Définitions**

**Définition 1** *: Un espace $V_0 \subset L^2(R)$ est un espace fovéal centré en 0 si il existe une famille génératrice finie*

*$\{\psi^m\}1 \leq m \leq M$ appartenant à $L^2(R)$ telle que $\left\{\psi_j^m\right\}1 \leq m \leq M_j \in Z$ est une base de Riesz de $V_0$ et telle que :*

$$f \in V_0 \Rightarrow f.1_{[0,+\infty[} \in V_0$$

(R désignant l'ensemble des nombres réels et Z l'ensemble des entiers naturels positifs ou négatifs).
**Définition 2** *: soit f';R→R définie à partir de f par $\forall t \in R$, f'(t) = f(t + u), $V_u$ est un espace fovéal centré en u si il satisfait $f \in V_u \Leftrightarrow f' \in V_0$*
La projection d'une fonction *f* sur $V_u$ est alors une fonction dont la résolution décroît lorsque l'on s'éloigne de la fovéa *u*, d'où l'analogie avec le caractère fovéal de la vision humaine.

**2. Base d'ondelettes fovéales dans le cas continu**

Soit $\phi$ une fonction paire avec $\int\phi(t).dt \neq 0$. Nous décomposons $V_0$ en deux sous espace $V_0^e$ et $V_0^o$ composés respectivement des fonctions paires et impaires. En définissant :

❖

$$\psi^1(t) = (\phi(t) - \phi(2t)).sign(t) = \bar{\phi}(t) - \bar{\phi}(2t)$$

❖

$$\psi^2(t) = \phi(t) - 2.\phi(2t)$$

où *sign(t)* est la fonction signe de la variable réelle t, égale à +1 pour t supérieur à 0 et égale à -1 pour t inférieur à 0, il a été montré dans la référence [5] que $\left\{\psi_j^1\right\}j \in Z$ est une base de Riesz de $V_0^o$ et que $\left\{\psi_j^2\right\}j \in Z$ est une base de $V_0^e$.

$V_0^o$ et $V_0^e$ étant des supplémentaires orthogonaux, on en déduit que $\left\{\psi_j^1, \psi_j^2,\right\}j \in Z$ est une base de $V_0$ (base d'ondelettes fovéales).

Les bases $\left\{\psi_j^1\right\}j \in Z$ et $\left\{\psi_j^2\right\}j \in Z$ n'étant pas toujours orthogonales à la construction, on peut utiliser la technique d'orthogonalisation de Gram-Schmidt.

**3. Base d'ondelettes fovéales dans le cas discret**

Dans cette section, nous présentons la procédure permettant de construire une base d'ondelettes fovéales discrètes en n, développée dans la référence [5]. Les signaux considérés seront échantillonnés en $t = n - \dfrac{1}{2}$ . L'origine $t = 0$ se trouvera alors entre $n = 0$ et $n = 1$. De plus, par la suite nous noterons :

❖

$$\bar{f}[n] = f[n].sign\left(n - \frac{1}{2}\right)$$

❖

$$f^{-}[n] = f[n]\,1_{\left]-\infty,\frac{1}{2}\right]}(n)$$

❖

$$f^{+}[n] = f[n]\,1_{\left[\frac{1}{2},+\infty\right[}(n)$$

**Définition 3** : *Si une famille de fenêtres fovéales discrètes* {$\phi_j$ [$n$]}$0 \leq j \leq s$ *satisfait:*

❖

$$\phi_j[n] = \phi_j[1-n]$$

❖ il existe *K* > 0 tel que le support de $\phi_j[n]$ est $\left[-K2^{j}+1, K2^{j}\right]$

❖ il existe *C* > 0 tel que $\sum_{n=0}^{+\infty}\phi_j[n] = C2^{j/2}$ ,

*alors la famille* $\left\{\phi_j^{-}, \phi_j^{+}\right\} 0 \leq j \leq s$ *est une base de l'espace fovéal V$_{0,s}$, cet espace fovéal V$_{0,s}$ correspondant aux fonctions discrètes sous-échantillonnées jusqu'au niveau j = s de sous-échantillonnage.*

Par analogie avec le cas continu des paragraphes précédents, si l'on définit :

❖

$$\psi_j^{1}[n] = \bar{\phi}_j[n] - 2^{-1/2}\,\bar{\phi}_{j-1}[n]$$

❖

$$\psi_j^{2}[n] = \phi_j[n] - 2^{1/2}\,\phi_{j-1}[n]$$

il a été démontré dans la référence [5] que la famille est une base d'ondelettes fovéales impaires de $V_{0,s}^{o}$ et que

$$\left\{\psi_j^2, \phi_s\right\} 1 \leq j \leq s$$ est une base d'ondelettes fovéales paires de $V_{0,s}^{e}$.

A la construction, ces bases ne sont pas forcément orthogonales. Toutefois une procédure d'orthogonalisation de Gram-Schmidt peut également être appliquée.

Dans ce qui précède, les fonctions mère $\phi$ sont par exemple choisies parmi des fonctions splines.

Les fonctions splines sont très utilisées dans le cadre de l'interpolation. En effet, celles-ci permettent d'interpoler une suite de points par des fonctions polynomiales par morceaux. L'ordre des polynômes interpolateurs correspond à l'ordre de la fonction spline d'interpolation.

**Définition 4** : *Une fonction spline d'ordre 0 est :* $\phi^0 = 1_{[-1,1]}$. *Les fonctions splines d'ordre supérieur sont définies récursivement par* $\phi^P(t) = \int_{-\infty} (\phi^{p-1}(2x) - \phi^{p-1}(x)) sign(x) dx$

On peut alors utiliser ces fonctions pour construire des bases d'ondelettes fovéales. Un exemple de base d'ondelettes fovéales obtenue à partir de splines d'ordre 0 (fonctions en escalier) est présentée aux figures 9, 10, 11 représentant respectivement $\phi_2(n)$, $\psi_2^2(n)$ et $\psi_2^1(n)$. Les bases d'ondelettes fovéales obtenues à partir de splines d'ordre supérieur à 0 n'étant pas orthogonales par défaut, il faut appliquer une procédure d'orthogonalisation de Gram-Schmidt.

## ANNEXE 3

### LISTE DES REFERENCES

[1] Mallat S., "A Theory for Multiresolution Signal Decomposition: the Wavelet Representation", IEEE Transactions on Pattern Analysis and Machine Intelligence, Vol. 11, N˚7, Juillet 1989, pp. 674-693.

[2] Stollnitz E.J., DeRose T.D., Salesin D., "Wavelets for Computer Graphics: A Primer-Parf 1 ", IEEE Computer Graphics and Applications, Mai 1995, pp. 76-84.

[3] Stollnitz E.J., DeRose T.D., Salesin D., "Wavelets for Computer Graphics: A Primer-Part 2", IEEE Computer Graphics and Applications, Juillet 1995, pp. 75-85.

[4] Shapiro J.M., "Embedded Image Coding Using Zerotrees of Wavelet Coefficients", IEEE Transactions on Signal Processing, Vol. 41, N˚12, Décembre 1993, pp. 3445-3462.

[5] S. Mallat, "Foveal detection and approximation for singularities", submitted to Applied and Computational Harmonic Analysis, vol 14, pp. 133-180, 2003.

[6] Christophe Laurent, Nathalie Laurent and Muriel Visani, "Color Image Retrieval based on Wavelet salient features detection", CBMI 2003, Third International Workshop on Content-Based Multimedia Indexing, Rennes, France.

[7] Mark S. Drew, Jie Wei, and Ze-Nian Li, "Illumination-invariant color object recognition via compressed chromaticity histograms of color-channel-normalized images", in ICCV, International Conference on Computer Vision 98, pages 533-540, 1998.

[8] F. Mindru, T. Moons, and L. Van Gool, "Recognizing color patterns irrespective of viewpoint and illumination", IEEE, pages 368-373, 1999.

[9] Graham D. Finlayson, Subho S. Chatterjee" and Brian V. Funt, "Color angular indexing", In ECCV (2), pages 16-27, 1996.

[10] B.S. Manjunath and W. Y. MA, "Texture features for browsing and retrieval of image data", In IEEE transactions on pattern analysis and machine intelligence, volume 18, n˚8, pages 837-842, August 1996.

[11] L. Cieplinski, M. Kim, J.R. Ohm, M. Pickering and A. Yamada, "Text of ISO/IEC 15938-3/FCD Information technology - Multimedia content description interface - Part 3 Visual", Tech. Rep N4062, ISO/IEC JTC1/SC29/WG11, Singapore, 2001.

[12] Jack E. Bresenham, "Algorithm for Computer Control of a Digital Plotter", IBM Systems Journal, vol. 4, n˚1 : 25-30, 1965.

**Revendications**

1.  Procédé de caractérisation d'une image numérique,
    dans lequel on détecte au moins un point (PI) d'intérêt dans l'image numérique, associé à une région de l'image présentant de hautes fréquences,
    **caractérisé en ce que** pour un point $PI_n$

    - on sélectionne une première région (RPI) bidimensionnelle de travail déterminée de l'image numérique, de taille inférieure à celle-ci et contenant le point détecté (PI),
    - pour chacune (θ) d'une pluralité (I) d'orientations différentes prescrites dans l'image numérique :

       on extrait de la première région (RPI) bidimensionnelle de travail, suivant des droites (K) ayant ladite orientation (θ), une famille ($\{f_\theta^{(k)}(n)\}_{1 \le k \le K}$) de lignes ($f_\theta^{(k)}(n)$) monodimensionnelles de points,
       on calcule, pour chaque ligne ($f_\theta^{(k)}(n)$) monodimensionnelle de points de la famille extraite et pour chaque niveau (s) de sous-échantillonnage parmi des niveaux prescrits de sous-échantillonnage, un signal ($E_{\theta,s}^{(k)}(n)$) d'énergie fovéale utilisant des ondelettes fovéales,

    - on combine les signaux ($E_{\theta,s}^{(k)}(n)$) d'énergie fovéale sur les lignes et sur leur argument pour calculer une signature fovéale (SI), dépendant des orientations (θ) et des niveaux (s) de sous-échantillonnage et caractérisant la région de travail.

2.  Procédé de caractérisation suivant la revendication 1, **caractérisé en ce que**
    le signal $E_{\theta,s}^{(k)}(n)$ d'énergie fovéale est égal à

$$E_{\theta,s}^{(k)}(n) = |\Sigma_m f_\theta^{(k)}(m) . \psi_s^{(1)}(n\text{-}m)|^2 + |\Sigma_m f_\theta^{(k)}(m) . \psi_s^{(2)}(n\text{-}m)|^2,$$

    où
    θ désigne chacune de ladite pluralité de I orientations,
    $\{f_\theta^{(k)}(n)\}_{1 \le k \le K}$ désigne ladite famille desdites K lignes $f_\theta^{(k)}(n)$ monodimensionnelles de points extraite pour chaque orientation θ,
    K est un entier naturel prescrit pour chaque orientation θ,
    s désigne chaque niveau de sous-échantillonnage parmi lesdits J niveaux prescrits de sous-échantillonnage,
    n désigne l'argument des signaux $E_{\theta,s}^{(k)}(n)$ d'énergie fovéale,
    $\{\psi_j^{(1)}, \psi_j^{(1)}\}_{1 \le j \le s}$ est une base desdites ondelettes fovéales, allant jusqu'au niveau s de sous-échantillonnage, de l'espace fovéal $V_s$ de signaux monodimensionnels discrets, $\{\psi_j^{(1)t}\}_{1 \le j \le s}$ étant une base d'ondelettes fovéales impaires et $\{\psi_j^{(2)}\}_{1 \le j \le s}$ étant une base d'ondelettes fovéales paires,

3.  Procédé de caractérisation suivant la revendication 2, **caractérisé en ce que** la base d'ondelettes fovéales impaires $\{\psi_j^{(1)}\}_{1 \le j \le s}$ est définie par

$$\psi_j^{(1)}(n) = \Phi_j(n).\text{sign}(n\text{-}1/2) - 2^{-1/2}.\Phi_{j\text{-}1}(n).\text{sign}(n\text{-}1/2),$$

    la base d'ondelettes fovéales paires $\{\psi_j^{(2)}\}_{1 \le j \le s}$ est définie par

$$\psi_j^{(2)}(n) = \Phi_j(n) - 2^{1/2}.\Phi_{j\text{-}1}(n),$$

    sign(t) étant la fonction signe de la variable réelle t, égale à +1 pour t supérieur à 0 et égale à -1 pour t inférieur à 0,

$\Phi_j(t)$ étant une fonction paire de la variable réelle t, vérifiant :

$$\int_{-\infty}^{+\infty} \Phi_0(t).dt \neq 0 \; .$$

4. Procédé de caractérisation suivant la revendication 3, **caractérisé en ce que** les bases d'ondelettes fovéales $\{\psi_j^{(1)}, \psi_j^{(2)}\}_{1 \leq j \leq s}$ sont construites à partir de fonctions $\Phi_j(t)$ splines définies par :

$$\Phi_0(t) = 1 \text{ pour } -1 \leq t \leq +1 \text{ et } 0 \text{ ailleurs,}$$

et

$$\Phi_j(t) = \int_{-\infty}^{t} (\Phi_{j-1}(2x) - \Phi_{j-1}(x)).sign(x).dx \text{ pour } j \geq 1.$$

5. Procédé de caractérisation suivant l'une quelconque des revendications précédentes, **caractérisé en ce que** ladite signature fovéale (SI) est calculée par analyse statistique des signaux $(E_{\theta,s}^{(t)}(n))$ d'énergie fovéale sur les lignes et sur leur argument (n).

6. Procédé de caractérisation suivant l'une quelconque des revendications 2 à 5, **caractérisé en ce que** ladite signature fovéale SI est égale à

$$SI = (\mu_{is}\sigma_{is})_{1 \leq i \leq I, 1 \leq s \leq J},$$

avec
$\mu_{is} = (1/NM).\Sigma_k\Sigma_n E_{i,s}^{(k)}(n)$ correspondant à la moyenne du signal d'énergie fovéale $E_{i,s}^{(k)}(n)$ suivant l'orientation i et le niveau de sous-échantillonnage s sur la région de travail (RPI),
$\sigma_{is} = (1/NM).[\Sigma_k\Sigma_n(E_{i,s}^{(k)}(n) - \mu_{is})^2]^{1/2}$ correspondant à l'écart-type du signal d'énergie fovéale $E_{i,s}^{(k)}(n)$ suivant l'orientation i et le niveau de sous-échantillonnage s sur la région de travail (RPI),
NM correspondant à la taille de la région de travail (RPI).

7. Procédé de caractérisation suivant l'une quelconque des revendications précédentes, **caractérisé en ce que** l'extraction de la famille $(\{f_\theta^{(k)}(n)\}_{1 \leq k \leq K})$ de lignes $(f_\theta^{(k)}(n))$ monodimensionnelles de points suivant les droites à partir de la première région (RPI) bidimensionnelle de travail est exécutée selon l'algorithme de Bresenham permettant le tracé de droites inclinées sur une grille discrète.

8. Procédé de caractérisation suivant l'une quelconque des revendications précédentes, **caractérisé en ce que** la première région (RPI) bidimensionnelle de travail entoure le point détecté (PI) et a une taille (NM) inférieure au dixième de la taille de l'image numérique.

9. Procédé de caractérisation suivant l'une quelconque des revendications précédentes, **caractérisé en ce que** la première région (RPI) bidimensionnelle de travail entoure le point détecté (PI) et a une taille (NM) inférieure ou égale à 15 pixels x 15 pixels.

10. Procédé de caractérisation suivant l'une quelconque des revendications précédentes, **caractérisé en ce que** ladite pluralité (I) d'orientations différentes prescrites dans l'image numérique partagent le secteur angulaire allant de -90° à +90° par rapport à l'horizontale en des angles égaux.

11. Procédé de caractérisation l'une quelconque des revendications précédentes, **caractérisé en ce que** le nombre (I) desdites orientations est de huit.

12. Procédé de caractérisation l'une quelconque des revendications précédentes, **caractérisé en ce que** la signature fovéale est associée à l'image numérique et est stockée en mémoire en association avec cette image numérique.

13. Application du procédé de caractérisation suivant l'une quelconque des revendications précédentes à des images numériques en vue de leur comparaison, dans laquelle les signatures fovéales calculées pour les images numériques sont comparées entre elles.

14. Application suivant la revendication 13, **caractérisée en ce qu'**une signature fovéale de référence est calculée pour une image de référence et, pour la comparaison des signatures fovéales, on calcule une distance des signatures fovéales calculées pour les autres images par rapport à la signature de référence, l'image la plus proche de l'image de référence étant celle ayant la distance la plus faible par rapport à celle-ci.

15. Application suivant la revendication 14, **caractérisée en ce que** l'on sélectionne un nombre prescrit d'images les plus proches de l'image de référence.

16. Application du procédé de caractérisation suivant l'une quelconque des revendications 1 à 12 à la reconnaissance de formes dans l'image numérique, dans laquelle la signature fovéale est utilisée pour caractériser une forme située dans la région de travail.

17. Application suivant la revendication 16, à la reconnaissance de visages, dans laquelle la signature fovéale est utilisée pour caractériser un trait du visage, situé dans la région de travail.

18. Application du procédé de caractérisation suivant l'une quelconque des revendications 1 à 12 à l'indexation d'images numériques par requêtes partielles, dans laquelle on extrait d'une base d'images numériques, les images numériques contenant un objet spécifié par la requête,
une image numérique étant déterminée comme contenant ledit objet lorsqu'une distance de la signature fovéale calculée pour cette image par rapport à la signature fovéale calculée pour l'objet situé au moins en partie dans la région de travail est inférieure à un seuil prescrit.

19. Application du procédé de caractérisation suivant l'une quelconque des revendications 1 à 12 à la classification d'images numériques par comparaison de leur signature fovéale.

## Claims

1. Method of characterizing a digital image,
   in which at least one point (PI) of interest in the digital image and associated with a region of the image exhibiting high frequencies is detected,
   **characterized in that** for a point $PI_n$

   - a first determined bidimensional work region (RPI) of the digital image, of smaller size than the latter and containing the point detected (PI), is selected,
   - for each ($\theta$) of a plurality (I) of different orientations prescribed in the digital image: a family ($\{f_0^{(k)}(n)\}_{1 \leq k \leq K}$) of monodimensional lines ($f_\theta^{(k)}(n)$) of points is extracted from the first bidimensional work region (RPI) according to straight lines (K) having said orientation ($\theta$),
   a foveal energy signal ($E_{\theta,s}^{(k)}(n)$) is calculated, for each monodimensional line ($f_\theta^{(k)}(n)$) of points of the family extracted and for each level (s) of subsampling from among prescribed subsampling levels, using foveal wavelets,
   - the foveal energy signals ($E_{\theta,s}^{(k)}(n)$) are combined on the lines and on their argument so as to calculate a foveal signature (SI), depending on the orientations ($\theta$) and levels (s) of subsampling and characterizing the work region.

2. Characterizing method according to Claim 1,
   **characterized in that**
   the foveal energy signal $E_{\theta,s}^{(k)}(n)$ is equal to $E_{\theta,s}^{(k)}(n) = |\Sigma_m f_\theta^{(k)}(m) \cdot \psi_s^{(1)}(n-m)|^2 + |\Sigma_m f_\theta^{(k)}(m) \cdot \psi_s^{(2)}(n-m)|^2$, where
   $\theta$ denotes each of said plurality of I orientations,
   $\{f_\theta^{(k)}(n)\}_{1 \leq k \leq K}$ denotes said family of said K monodimensional lines $f_\theta^{(k)}(n)$ of points extracted for each orientation $\theta$,
   K is a natural integer prescribed for each orientation $\theta$,
   s denotes each level of subsampling from among said J prescribed subsampling levels,
   n denotes the argument of the foveal energy signals $E_{\theta,s}^{(k)}(n)$,
   $\{\psi_j^{(1)}, \psi_j^{(2)}\}_{1 \leq j \leq s}$ is a basis of said foveal wavelets, going up to subsampling level s, of the foveal space $V_s$ of discrete monodimensional signals, $\{\psi_j^{(1)}\}_{1 \leq j \leq s}$ being a basis of odd foveal wavelets and $\{\psi_j^{(2)}\}_{1 \leq j \leq s}$ being a basis of even foveal wavelets.

3. Characterizing method according to Claim 2, **characterized in that** the basis of odd foveal wavelets $\{\psi_j^{(1)}\}_{1 \leq j \leq s}$ is defined by

$$\psi_j^{(1)}(n) = \Phi_j(n).sign(n-1/2) - 2^{-1/2}.\Phi_{j-1}(n).sign(n-1/2),$$

the basis of even foveal wavelets $\{\psi_j^{(2)}\}_{1 \leq j \leq s}$ is defined by

$$\psi_j^{(2)}(n) = \Phi_j(n) - 2^{1/2}.\Phi_{j-1}(n),$$

sign(t) being the sign function of the real variable t, equal to +1 for t greater than 0 and equal to -1 for t less than 0; $\Phi_j(t)$ being an even function of the real variable t, satisfying:

$$\int_{-\infty}^{+\infty} \Phi_0(t).dt \neq 0.$$

4. Characterizing method according to Claim 3,
   **characterized in that** the foveal wavelet bases $\{\psi_j^{(1)}, \psi_j^{(2)}\}_{1 \leq j \leq s}$ are constructed from spline functions $\Phi_j(t)$ defined by:

$$\Phi_0(t) = 1 \text{ for } -1 \leq t \leq +1 \text{ and } 0 \text{ otherwise,}$$

and

$$\Phi_j(t) = \int_{-\infty}^{t} (\Phi_{j-1}(2x) - \Phi_{j-1}(x)).sign(x).dx \text{ for } j \geq 1.$$

5. Characterizing method according to any one of the preceding claims, **characterized in that** said foveal signature (SI) is calculated by statistical analysis of the foveal energy signals ($E_{\theta,s}^{(k)}(n)$) on the lines and on their argument (n).

6. Characterizing method according to any one of Claims 2 to 5, **characterized in that** said foveal signature SI is equal to

$$SI = (\mu_{iS}\sigma_{Is})_{1 \leq i \leq I, 1 \leq s \leq J},$$

with
$\mu_{is} = (1/NM).\Sigma_k\Sigma_n E_{i,s}^{(k)}(n)$ corresponding to the mean of the foveal energy signal $E_{i,s}^{(k)}(n)$ along the orientation i and the subsampling level s on the work region (RPI), $\sigma_{is} = (1/NM).[\Sigma_k\Sigma_n (E_{i,s}^{(k)}(n) - \mu_{is})^2]^{1/2}$ corresponding to the standard deviation of the foveal energy signal $E_{i,s}^{(k)}(n)$ along the orientation i and the subsampling level s on the work region (RPI),
NM corresponding to the size of the work region (RPI).

7. Characterizing method according to any one of the preceding claims, **characterized in that** the extraction of the family ($\{f_\theta^{(k)}(n)\}_{b1 \leq k \leq K}$) of monodimensional lines ($f_\theta^{(k)}(n)$) of points along the straight lines from the first bidimensional work region (RPI) is executed according to the Bresenham algorithm allowing the plotting of inclined straight lines on a discrete grid.

8. Characterizing method according to any one of the preceding claims, **characterized in that** the first bidimensional work region (RPI) surrounds the detected point (PI) and has a size (NM) smaller than a tenth of the size of the digital image.

9. Characterizing method according to any one of the preceding claims, **characterized in that** the first bidimensional work region (RPI) surrounds the detected point (PI) and has a size (NM) smaller than or equal to 15 pixels x 15 pixels.

EP 1 751 694 B1

10. Characterizing method according to any one of the preceding claims, **characterized in that** said plurality (I) of different orientations prescribed in the digital image share the angular sector going from -90˚ to +90˚ with respect to the horizontal as equal angles.

11. Characterizing method according to any one of the preceding claims, **characterized in that** the number (I) of said orientations is eight.

12. Characterizing method according to any one of the preceding claims, **characterized in that** the foveal signature is associated with the digital image and is stored in memory in association with this digital image.

13. Application of the characterizing method according to any one of the preceding claims to digital images with a view to their comparison, in which the foveal signatures calculated for the digital images are compared with one another.

14. Application according to Claim 13, **characterized in that** a reference foveal signature is calculated for a reference image and, for the comparison of the foveal signatures, a distance of the foveal signatures calculated for the other images with respect to the reference signature is calculated, the image closest to the reference image being that having the smallest distance with respect to the latter.

15. Application according to Claim 14, **characterized in that** a prescribed number of images closest to the reference image is selected.

16. Application of the characterizing method according to any one of Claims 1 to 12 to the recognition of shapes in the digital image, in which the foveal signature is used to characterize a shape situated in the work region.

17. Application according to Claim 16, to the recognition of faces, in which the foveal signature is used to characterize a feature of the face, situated in the work region.

18. Application of the characterizing method according to any one of Claims 1 to 12 to the indexing of digital images through partial requests, in which the digital images containing an object specified by the request are extracted from a digital image base,
a digital image being determined as containing said object when a distance of the foveal signature calculated for this image with respect to the foveal signature calculated for the object situated at least in part in the work region is less than a prescribed threshold.

19. Application of the characterizing method according to any one of Claims 1 to 12 to the classifying of digital images by comparing their foveal signature.


**Patentansprüche**

1. Verfahren zur Charakterisierung eines digitalen Bilds, bei dem mindestens ein interessanter Punkt (PI) im digitalen Bild erfasst wird, der einem hohe Frequenzen aufweisenden Bereich des Bilds zugeordnet ist,
**dadurch gekennzeichnet, dass** für einen Punkt (PI)

   - ein erster bestimmter zweidimensionaler Arbeitsbereich (RPI) des digitalen Bilds ausgewählt wird, der kleiner ist als dieses und den erfassten Punkt (PI) enthält,
   - für jede ($\theta$) von mehreren (I) unterschiedlichen Ausrichtungen, die im digitalen Bild vorgeschrieben sind: aus dem ersten zweidimensionalen Arbeitsbereich (RPI) gemäß Geraden (K) mit der Ausrichtung ($\theta$) eine Familie ($\{f_\theta^{(k)}(n)\}1_{\leq k \leq K}$) von eindimensionalen Zeilen ($f_\theta^{(k)}(n)$) von Punkten extrahiert wird, für jede eindimensionale Zeile ($f_\theta^{(k)}(n)$) von Punkten der extrahierten Familie und für jede Unterabtastungsebene (s) von vorgeschriebenen Unterabtastungsebenen ein Signal ($E_{\theta,s}^{(k)}(n)$) fovealer Energie berechnet wird, das foveale Wavelets verwendet,
   - die Signale $E_{\theta,s}^{(k)}(n)$) fovealer Energie in den Zeilen und in ihrem Argument kombiniert werden, um eine foveale Signatur (SI) zu berechnen, die von den Ausrichtungen ($\theta$) und von den Unterabtastungsebenen (s) abhängt und den Arbeitsbereich charakterisiert.

2. Charakterisierungsverfahren nach Anspruch 1,
**dadurch gekennzeichnet, dass**

das Signal $E_{\theta,s}^{(k)}(n)$ fovealer Energie gleich

$$E_{\theta,s}^{(k)}(n) = \left| \sum_m f_\theta^{(k)}(m) \cdot \psi_s^{(1)}(n-m) \right|^2 + \left| \sum_m f_\theta^{(k)}(m) \cdot \psi_s^{(2)}(n-m) \right|^2$$

ist, wobei
θ jede der mehreren I Ausrichtungen bezeichnet,
$\{f_\theta^{(k)}(n)\}_{1 \le k \le K}$ die Familie der K eindimensionalen Zeilen $f_\theta^{(k)}(n)$ von Punkten bezeichnet, die für jede Ausrichtung θ extrahiert wird,
K eine vorgeschriebene natürliche ganze Zahl für jede Ausrichtung θ ist,
s jede Unterabtastungsebene unter den J vorgeschriebenen Unterabtastungsebenen bezeichnet,
n das Argument der Signale $E_{\theta,s}^{(k)}(n)$ fovealer Energie bezeichnet,
$\{\psi_j^{(1)}\psi_j^{(2)}\}_{1 \le j \le s}$ eine Basis der fovealen Wavelets, die bis zur Unterabtastungsebene s geht, des fovealen Raums $V_s$ von diskreten eindimensionalen Signalen ist, wobei $\{\psi_j^{(1)}\}_{1 \le j \le s}$ eine Basis von ungeraden fovealen Wavelets ist und $\{\psi_j^{(2)}\}_{1 \le j \le s}$ eine Basis von geraden fovealen Wavelets ist.

3. Charakterisierungsverfahren nach Anspruch 2,
**dadurch gekennzeichnet, dass**
die Basis von ungeraden fovealen Wavelets $\{\psi_j^{(1)}\}_{1 \le j \le s}$ definiert wird durch

$$\psi_j^{(1)}(n) = \Phi_j(n) \cdot \text{sign}(n-1/2) - 2^{-1/2} \cdot \Phi_{j-1}(n) \cdot \text{sign}(n-1/2),$$

die Basis von geraden fovealen Wavelets $\{\psi_j^{(2)}\}_{1 \le j \le s}$ definiert wird durch

$$\psi_j^{(2)}(n) = \Phi_j(n) - 2^{1/2} \cdot \Phi_{j-1}(n),$$

wobei
sign(t) die Vorzeichenfunktion der realen Variablen t gleich +1 für t größer als 0 und gleich -1 für t kleiner als 0 ist;
$\Phi_j(t)$ eine gerade Funktion der realen Variablen t ist, die erfüllt:

$$\int_{-\infty}^{+\infty} \Phi_0(t) \, dt \ne 0.$$

4. Charakterisierungsverfahren nach Anspruch 3, **dadurch gekennzeichnet, dass** die Basen von fovealen Wavelets $\{\psi_j^{(1)}, \psi_j^{(2)}\}_{1 \le j \le s}$ ausgehend von Spline-Funktionen $\Phi_j(t)$ konstruiert werden, die definiert sind durch:

$$\Phi_0(t) = 1 \text{ für } -1 \le t \le +1 \text{ und sonst } 0,$$

und

$$\Phi_j(t) = \int_{-\infty}^{t} (\Phi_{j-1}(2x) - \Phi_{j-1}(x)) \cdot \text{sign}(x) \, dx \text{ für } j \ge 1$$

5. Charakterisierungsverfahren nach einem der vorhergehenden Ansprüche, **dadurch gekennzeichnet, dass** die foveale Signatur (SI) durch statistische Analyse der Signale $(E_{\theta,s}^{(k)}(n))$ fovealer Energie in den Zeilen und in ihrem Argument (n) berechnet wird.

6. Charakterisierungsverfahren nach einem der Ansprüche 2 bis 5, **dadurch gekennzeichnet, dass** die foveale Signatur SI gleich

$$SI = (\mu_{is}\sigma_{is})_{1\leq i\leq l, 1\leq s\leq j} \text{ ist,}$$

mit

$\mu_{is} = (1/NM)\cdot\Sigma_k\Sigma_n E_{i,s}^{(k)}(n)$ entsprechend dem Mittelwert des Signale $E_{i,s}^{(k)}(n)$ fovealer Energie gemäß der Ausrichtung i und der Unterabtastungsebene s im Arbeitsbereich (RPI),

$\sigma_{is} = (1/NM)\cdot[L_k\Sigma_n(E_{i,s}^{(k)}(n)-\mu_{is})^2]^{1/2}$ entsprechend der typischen Abweichung des Signals $E_{i,s}^{(k)}(n)$ fovealer Energie gemäß der Ausrichtung i und der Unterabtastungsebene s im Arbeitsbereich (RPI),

NM entsprechend der Größe des Arbeitsbereichs (RPI).

7. Charakterisierungsverfahren nach einem der vorhergehenden Ansprüche, **dadurch gekennzeichnet, dass** das Extrahieren der Familie $(\{f_\theta^{(k)}(n)\}_{1\leq k\leq K})$ von eindimensionalen Zeilen $(f_\theta^{(k)}(n))$ von Punkten gemäß den Geraden ausgehend vom ersten zweidimensionalen Arbeitsbereich (RPI) nach dem Bresenham-Algorithmus durchgeführt wird, der das Rastern von geneigten Geraden auf einem diskreten Gitter erlaubt.

8. Charakterisierungsverfahren nach einem der vorhergehenden Ansprüche, **dadurch gekennzeichnet, dass** der erste zweidimensionale Arbeitsbereich (RPI) den erfassten Punkt (PI) umgibt und eine Größe (NM) hat, die geringer als ein Zehntel der Größe des digitalen Bilds ist.

9. Charakterisierungsverfahren nach einem der vorhergehenden Ansprüche, **dadurch gekennzeichnet, dass** der erste zweidimensionale Arbeitsbereich (RPI) den erfassten Punkt (PI) umgibt und eine Größe (NM) kleiner als oder gleich 15 Pixel x 15 Pixel hat.

10. Charakterisierungsverfahren nach einem der vorhergehenden Ansprüche, **dadurch gekennzeichnet, dass** die mehreren (I) vorgeschriebenen unterschiedlichen Ausrichtungen im digitalen Bild den Winkelsektor von -90˚ bis +90˚ bezüglich der Waagrechten in gleiche Winkel teilen.

11. Charakterisierungsverfahren nach einem der vorhergehenden Ansprüche, **dadurch gekennzeichnet, dass** die Anzahl (I) der Ausrichtungen acht ist.

12. Charakterisierungsverfahren nach einem der vorhergehenden Ansprüche, **dadurch gekennzeichnet, dass** die foveale Signatur dem digitalen Bild zugeordnet und in Verbindung mit diesem digitalen Bild gespeichert wird.

13. Anwendung des Charakterisierungsverfahrens nach einem der vorhergehenden Ansprüche auf digitale Bilder für ihren Vergleich, bei der die für die digitalen Bilder berechneten fovealen Signaturen miteinander verglichen werden.

14. Anwendung nach Anspruch 13, **dadurch gekennzeichnet, dass** eine foveale Bezugssignatur für ein Bezugsbild berechnet wird, und für den Vergleich der fovealen Signaturen ein Abstand der für die anderen Bilder berechneten fovealen Signaturen bezüglich der Bezugssignatur berechnet wird, wobei das dem Bezugsbild am nächsten liegende Bild dasjenige ist, das den geringsten Abstand bezüglich dieses Bezugsbilds hat.

15. Anwendung nach Anspruch 14, **dadurch gekennzeichnet, dass** eine vorgeschriebene Anzahl von Bildern ausgewählt wird, die dem Bezugsbild am nächsten sind.

16. Anwendung des Charakterisierungsverfahrens nach einem der Ansprüche 1 bis 12 auf die Erkennung von Formen im digitalen Bild, bei der die foveale Signatur verwendet wird, um eine Form zu charakterisieren, die sich im Arbeitsbereich befindet.

17. Anwendung nach Anspruch 16 auf die Erkennung von Gesichtern, bei der die foveale Signatur verwendet wird, um einen Gesichtszug zu charakterisieren, der sich im Arbeitsbereich befindet.

18. Anwendung des Charakterisierungsverfahrens nach einem der Ansprüche 1 bis 12 auf die Indexierung digitaler Bilder durch Teilanforderungen, bei der aus einer Basis von digitalen Bildern die digitalen Bilder extrahiert werden, die einen von der Anforderung spezifizierten Gegenstand enthalten, wobei ein digitales Bild als den Gegenstand enthaltend bestimmt wird, wenn ein Abstand der für dieses Bild berechneten fovealen Signatur bezüglich der für den Gegenstand, der sich zumindest zum Teil im Arbeitsbereich befindet, berechneten fovealen Signatur unter einer vorgeschriebenen Schwelle liegt.

**19.** Anwendung des Charakterisierungsverfahrens nach einem der Ansprüche 1 bis 12 auf die Klassifizierung digitaler Bilder durch Vergleich ihrer fovealen Signatur.

Transformée
ondelette
à la
résolution $2^{-1}$

$I$

$A_{2^{-1}} I$ $\quad$ $D_{2^{-1}}^{1} I$

$D_{2^{-1}}^{2} I$ $\quad$ $D_{2^{-1}}^{3} I$

Transformée ondelette
à la résolution $2^{-2}$

$A_{2^{-2}} I$ $\;$ $D_{2^{-2}}^{1} I$ $\qquad$ $D_{2^{-1}}^{1} I$

$D_{2^{-2}}^{2} I$ $\;$ $D_{2^{-2}}^{3} I$

$D_{2^{-1}}^{2} I$ $\qquad$ $D_{2^{-1}}^{3} I$

## FIG.1

Colonnes

Lignes

$A_{2^{j+1}} I$

G $\quad \downarrow x_2$

G $\quad \downarrow y_2 \quad \rightarrow D_2^3 {}_j I$

H $\quad \downarrow y_2 \quad \rightarrow D_2^2 {}_j I$

H $\quad \downarrow y_2$

G $\quad \downarrow y_2 \quad \rightarrow D_2^1 {}_j I$

H $\quad \downarrow y_2 \quad \rightarrow A_{2^j} I$

$\boxed{F}$ : convolution avec filtre F

$\boxed{\downarrow x_2}$ : sous-échantillonnage d'un facteur 2 suivant les colonnes

$\boxed{\downarrow y_2}$ : sous-échantillonnage d'un facteur 2 suivant les lignes

## FIG.2

$A_2 r I$    p(x,y)    $D_2^1 r I$

$D_2^2 r I$    $D_2^3 r I$

$A_2 r{+}1 I$    $D_2^1 r{+}1 I$

2y

$D_2^2 r{+}1 I$    2x    $D_2^3 r{+}1 I$

$A_2 r{+}2 I$

$D_2^1 r{+}2 I$

4x    4y

$D_2^2 r{+}2 I$    $D_2^3 r{+}2 I$

**FIG.3**

$S_2 r$

| 3 | 8 |
|---|---|
| 25 | 12 |

$S_2 r{+}1$

| 1 | 7 | 14 | 3 |
|---|---|----|---|
| 5 | 56 | 7 | 10 |
| 2 | 15 | 9 | 2 |
| 6 | 13 | 1 | 0 |

$S_2 r{+}2$

| 5 | 11 | 8 | 10 | 85 | 42 | 12 | 3 |
|---|----|---|----|----|----|----|---|
| 24 | 9 | 10 | 12 | 15 | 7 | 4 | 0 |
| 2 | 24 | 2 | 8 | 2 | 10 | 7 | 85 |
| 14 | 9 | 78 | 25 | 13 | 15 | 3 | 7 |
| 24 | 5 | 11 | 23 | 14 | 24 | 15 | 7 |
| 7 | 14 | 2 | 2 | 0 | 5 | 15 | 8 |
| 1 | 2 | 9 | 78 | 9 | 23 | 10 | 36 |

Extraction d'un arbre de saillance

12

9    2    1    0

13 15 14 24    3 7 15 7    0 5 9 23    15 8 10 36

**FIG.4**

Branche saillante = {12, 9, -24 }

FIG.5

FIG.6a

FIG.6b

EP 1 751 694 B1

FIG.7

26

FIG.8

FIG.9          FIG.10          FIG.11

| | | IMAGE N° | DISTANCE |
|---|---|---|---|
| I₁ | | 102 | 0 000000 |
| I₂ | | 139 | 6459 464355 |
| I₃ | | 274 | 6837 875488 |
| I₄ | | 303 | 6945 535156 |
| I₅ | | 171 | 7408 489746 |
| I₆ | | 181 | 7665 365723 |

$I_1$

$I_1$
(N°102)

$I_1$

$I_2$

$I_3$

$I_4$

$I_5$

$I_6$

## FIG.12

## RÉFÉRENCES CITÉES DANS LA DESCRIPTION

**Littérature non-brevet citée dans la description**

- **MALLAT S.** A Theory for Multiresolution Signal Decomposition: the Wavelet Representation. *IEEE Transactions on Pattern Analysis and Machine Intelligence,* Juillet 1989, vol. 11 (7), 674-693
- **STOLLNITZ E.J. ; DEROSE T.D ; SALESIN D.** Wavelets for Computer Graphics: A Primer-Parf 1. *IEEE Computer Graphics and Applications,* Mai 1995, 76-84
- **STOLLNITZ E.J. ; DEROSE T.D ; SALESIN D.** Wavelets for Computer Graphics: A Primer-Part 2. *IEEE Computer Graphics and Applications,* Juillet 1995, 75-85
- **SHAPIRO J.M.** Embedded Image Coding Using Zerotrees of Wavelet Coefficients. *IEEE Transactions on Signal Processing,* Décembre 1993, vol. 41 (12), 3445-3462
- **S. MALLAT.** Foveal detection and approximation for singularities. *Applied and Computational Harmonic Analysis,* 2003, vol. 14, 133-180
- **CHRISTOPHE LAURENT ; NATHALIE LAURENT ; MURIEL VISANI.** Color Image Retrieval based on Wavelet salient features detection. *CBMI 2003, Third International Workshop on Content-Based Multimedia Indexing,* 2003
- **MARK S. DREW ; JIE WEI ; ZE-NIAN LI.** Illumination-invariant color object recognition via compressed chromaticity histograms of color-channel-normalized images. *ICCV, International Conference on Computer Vision,* 1998, vol. 98, 533-540
- **F. MINDRU ; T. MOONS ; L. VAN GOOL.** Recognizing color patterns irrespective of viewpoint and illumination. *IEEE,* 1999, 368-373
- **GRAHAM D. FINLAYSON ; SUBHO S. CHATTERJEE ; BRIAN V. FUNT.** Color angular indexing. *ECCV,* 1996, vol. 2, 16-27
- **B.S. MANJUNATH ; W. Y. MA.** Texture features for browsing and retrieval of image data. *IEEE transactions on pattern analysis and machine intelligence,* Août 1996, vol. 18 (8), 837-842
- **L. CIEPLINSKI ; M. KIM ; J.R. OHM ; M. PICKERING ; A. YAMADA.** Text of ISO/IEC 15938-3/FCD Information technology - Multimedia content description interface - Part 3 Visual. *Tech. Rep N4062, ISO/IEC JTC1/SC29/WG11,* 2001
- **JACK E. BRESENHAM.** Algorithm for Computer Control of a Digital Plotter. *IBM Systems Journal,* 1965, vol. 4 (1), 25-30